# EUROPÄISCHE PATENTSCHRIFT

(11) **EP 2 286 185 B1**
(45) Veröffentlichungstag und Bekanntmachung des Hinweises auf die Patenterteilung: **25.01.2017**
(21) Anmeldenummer: 09753712.0
(22) Anmeldetag: 31.03.2009
(51) Int. Cl.: G01D 5/38, G01D 5/347

(54) **OPTISCHE POSITIONSMESSEINRICHTUNG**
OPTICAL POSITION MEASURING DEVICE
DISPOSITIF DE MESURE DE POSITION OPTIQUE

(30) Priorität: 31.05.2008 DE 102008025870
(43) Veröffentlichungstag der Anmeldung: 23.02.2011
(73) Patentinhaber: Dr. Johannes Heidenhain GmbH, 83301 Traunreut (DE)
(72) Erfinder: BENNER, Ulrich, 83308 Trostberg (DE)
(86) Internationale Anmeldenummer: PCT/EP2009/053797
(87) Internationale Veröffentlichungsnummer: WO 2009/144057

(56) Entgegenhaltungen:
- EP-A- 0 608 209
- EP-A- 1 852 684
- US-A- 5 648 658

## Beschreibung

Die vorliegende Erfindung betrifft eine optische Positionsmesseinrichtung nach dem Oberbegriff des Anspruchs 1.

Eine gattungsgemäße optische Positionsmesseinrichtung ist z.B. aus der EP 0 608 209 A2 bekannt. Diese umfasst neben einer Messteilung, z.B. ausgebildet als lineare Messteilung, eine relativ in mindestens einer Messrichtung hierzu verschiebbare Abtasteinheit. Auf Seiten der Abtasteinheit sind eine Lichtquelle; mindestens ein Abtastgitter sowie eine Detektoranordnung, bestehend aus mehreren Photoelementen, vorgesehen. Des Weiteren ist auf Seiten der Abtasteinheit eine sog. optische Leiteinrichtung bzw. Dämpfungsstruktur angeordnet, die aus einer Gitter-Teilung besteht, die senkrecht zu den anderen Gittern im Abtaststrahlengang orientiert ist. Mithilfe der zusätzlichen Gitter-Teilung kann in dieser Positionsmesseinrichtung die Lichtintensität gezielt eingestellt werden, die auf die Detektoranordnung auftrifft. Eine derartige Einstellung der auf die Detektoranordnung einfallenden Lichtintensität kann beispielsweise nötig sein, wenn in den Abtasteinheiten unterschiedlicher optischer Positionsmesseinrichtungen standardisierte Opto-ASICs zum Einsatz kommen sollen. Hierbei kann der Fall auftreten, dass der für eine erste Kategorie optischer Positionsmesseinrichtungen optimierte Opto-ASIC sich für weitere Kategorien optischer Positionsmesseinrichtungen als nicht optimal erweist. So ist etwa denkbar, dass die auf die Detektoranordnung des Opto-ASICs einfallende Intensität in den verschiedenen Positionsmesseinrichtungen unterschiedlich hoch ist. Mittels der Dämpfungsstruktur, ausgebildet als zusätzliche Gitter-Teilung - wie in der EP 0 608 209 A2 vorgeschlagen - kann dann die zu hohe Signalintensität auf Seiten der Detektoranordnung bedämpft werden. Aufgrund der anderen Orientierung dieser Gitter-Teilung bleibt der eigentliche Abtaststrahlengang zur Erzeugung der verschiebungsabhängigen Abtastsignale weitgehend unbeeinflusst. Aus der EP 0 608 209 A2 geht jedoch nicht hervor, wie und wo eine derartige Dämpfungsstruktur im Abtaststrahlengang bzw. in der Abtasteinheit am geeignetsten angeordnet und wie die Dämpfungsstruktur am vorteilhaftesten ausgestaltet wird.

Das Dokument US5648658 offenbart eine Positionsmesseinrichtung gemäß den Stand der Technik.

Aufgabe der vorliegenden Erfindung ist es, eine Positionsmesseinrichtung des oben erwähnten Typs zu schaffen, die eine flexible Einstellung der auf die Detektoranordnung einfallenden Lichtintensität ermöglicht.

Diese Aufgabe wird erfindungsgemäß durch eine Positionsmesseinrichtung mit den Merkmalen des Anspruchs 1 gelöst.

Vorteilhafte Ausführungen der erfindungsgemäßen Positionsmesseinrichtungen ergeben sich aus den Maßnahmen in den abhängigen Ansprüchen.

In der erfindungsgemäßen Positionsmesseinrichtung ist nunmehr vorgesehen, dass das Abtastgitter und die Dämpfungsstruktur auf der Vorder- und Rückseite eines transparenten Trägerelements im Abtaststrahlengang angeordnet sind.

Über die erfindungsgemäße Maßnahme kann insbesondere die Zahl der benötigten Bauelemente in der optischen Positionsmesseinrichtung verringert werden.

Desweiteren ist es möglich, dass die Dämpfungsstruktur eine ortsabhängig variierende Durchlässigkeit besitzt, so dass auf der Detektoranordnung eine zumindest in dieser Richtung gleichmäßige Lichtintensität resultiert.

Über diese Maßnahmen kann somit sichergestellt werden, dass etwa im Fall einer ohne Dämpfungsstruktur resultierenden, örtlich variierenden Intensität über die Detektoranordnung eine weitgehend homogene Intensitätsverteilung gewährleistet werden kann. Eine derart variierende Intensitätsverteilung kann beispielsweise in Verbindung mit speziellen Lichtquellen resultieren, die eine bestimmte Abstrahlcharakteristik besitzen. Die Detektionssicherheit bzgl. des in der Detektionsebene resultierenden Bildes lässt sich auf diese Art und Weise deutlich erhöhen, da damit über die Detektoranordnung hinweg eine homogene Lichtverteilung, vorzugsweise in Messrichtung, erzielt wird. Die Verarbeitung des resultierenden Lichtmusters in der Detektionsebene ist dann weniger störanfällig.

In Bezug auf die erfindungsgemäße Positionsmesseinrichtung gibt es vielfältige Ausführüngsmöglichkeiten.

So kann die Dämpfungsstruktur als Anordnung von lichtdurchlässigen Teilbereichen auf einer lichtundurchlässigen Schicht ausgebildet werden.

Es ist ferner möglich, dass die Dämpfungsstruktur als Gitter-Teilung ausgebildet ist, bei der lichtdurchlässige Teilbereiche periodisch auf der lichtundurchlässigen Schicht angeordnet sind.

Die Gitter-Teilung der Dämpfungsstruktur kann hierbei auch ein oder mehrere Periodizitäten aufweisen, die jeweils deutlich kleiner sind als die Ausdehnung der Detektoranordnung in einer Richtung senkrecht zur Messrichtung.

Des Weiteren kann die Dämpfungsstruktur auch aus mehreren in Messrichtung benachbart angeordneten Abschnitten bestehen, die jeweils eine periodisch in einer Richtung senkrecht zur Messrichtung angeordnete Gitterteilung mit linienförmigen lichtdurchlässigen Teilbereichen umfasst, die periodisch auf der lichtundurchlässigen Schicht auf einem Trägerelement angeordnet sind und wobei in Messrichtung benachbarte Abschnitte eine unterschiedliche Periodizität besitzen.

In einer möglichen Variante der erfindungsgemäßen Positionsmesseinrichtung sind die Elemente in der Abtasteinheit dergestalt angeordnet, dass
- die von der Lichtquelle emittierten Strahlenbündel zunächst eine Kollimation über eine Kollimatorlinse erfahren,
- die kollimierten Strahlenbündel daraufhin die Messteilung beaufschlagen,
- die Strahlenbündel anschließend das Abtastgitter, das Trägerelement und die Dämpfungsstruktur durchlaufen,
- und schließlich die Detektoranordnung beaufschlagen, an der dann verschiebungsabhängig modulierte Signale zur Weiterverarbeitung anliegen.

Weitere Einzelheiten und Vorteile der vorliegenden Erfindung seien anhand der nachfolgenden Beschreibung von Ausführungsbeispielen erfindungsgemäßer Positionsmesseinrichtungen in Verbindung mit den Figuren erläutert.

Es zeigt
- Figur 1: eine schematisierte Darstellung des Abtaststrahlengangs einer ersten Variante der erfindungsgemäßen Positionsmesseinrichtung;
- Figur 2a und 2b: die Vorder- und Rückseite des Trägerelements aus dem Beispiel in Figur 1;
- Figur 3: eine schematisierte Darstellung des Abtaststrahlengangs einer zweiten Variante der erfindungsgemäßen Positionsmesseinrichtung;
- Figur 4a: das in Verbindung mit einer bestimmten Lichtquelle resultierende Lichtmuster in der Detektionsebene einer Positionsmesseinrichtung gemäß Figur 3 ohne die Verwendung einer Dämpfungsstruktur;
- Figur 4b: eine Ansicht einer geeigneten Ausführungsform einer Dämpfungsstruktur;
- Figur 4c: das resultierende Lichtmuster in der Detektionsebene einer Positionsmesseinrichtung gemäß Figur 3 unter Verwendung einer Dämpfungsstruktur gemäß Figur 4b;
- Figur 5a: das in Verbindung mit einer anderen Lichtquelle resultierende Lichtmuster in der Detektionsebene einer Positionsmesseinrichtung gemäß Figur 3 ohne die Verwendung einer Dämpfungsstruktur;
- Figur 5b: eine Ansicht einer weiteren Ausführungsform einer Dämpfungsstruktur;
- Figur 5c: das resultierende Lichtmuster in der Detektionsebene einer Positionsmesseinrichtung gemäß Figur 3 unter Verwendung einer Dämpfungsstruktur gemäß Figur 5b;
- Figur 6: eine weitere Ansicht einer Ausführungsform einer geeigneten Dämpfungsstruktur.
- Figur 7a und 7b: jeweils eine weitere Ansicht einer Ausführungsform einer geeigneten radial ausgebildeten Dämpfungsstruktur.

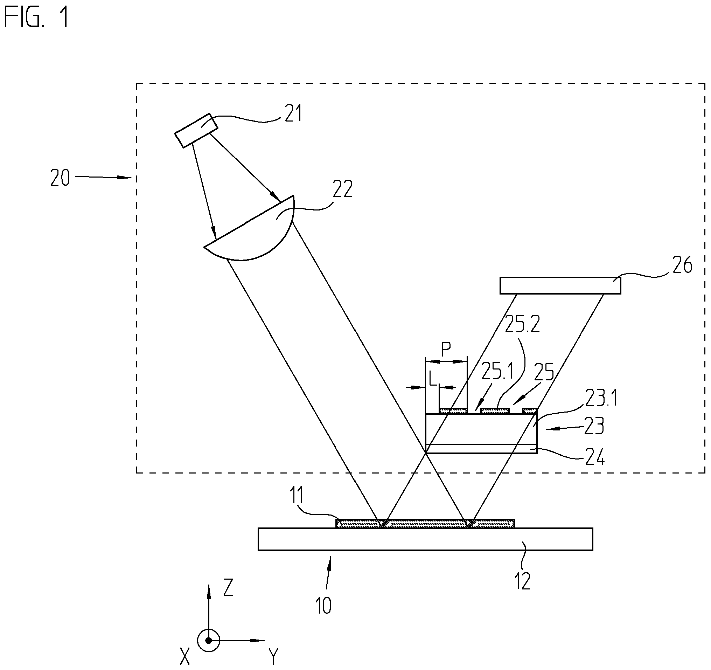

In Figur 1 ist in schematisierter Form der Abtaststrahlengang einer ersten Variante der erfindungsgemäßen Positionsmesseinrichtung dargestellt.

Im vorliegenden Beispiel umfasst die erfindungsgemäße Positionsmesseinrichtung eine Abtasteinheit 20, die gegenüber einer Maßverkörperung 10 mit einer Messteilung 11 mindestens in Messrichtung x beweglich angeordnet ist. Die Messrichtung x ist wie in der Figur angedeutet senkrecht zur Zeichenebene orientiert. Die Maßverkörperung 10 und die Abtasteinheit 20 sind z.B. mit zwei zueinander in der Messrichtung x verschiebbar angeordneten Objekten verbunden, etwa zwei zueinander beweglichen Maschinenteilen. Über die verschiebungsabhängigen Positionssignale der erfindungsgemäßen Positionsmesseinrichtung kann eine - nicht gezeigte - nachgeordnete Steuereinheit die Bewegung dieser Maschinenteile in bekannter Art und Weise geeignet steuern.

Die Messteilung 11 ist im dargestellten Beispiel als sich linear in Messrichtung x erstreckende Reflexions-Messteilung auf einem Trägerkörper 12 ausgebildet, die periodisch angeordnete Teilungsbereiche mit unterschiedlichen Reflexionseigenschaften umfasst. Die strichförmigen Teilungsbereiche erstrecken sich in der angegebenen y-Richtung, d.h. in der Messteilungsebene senkrecht zur Messrichtung x. Die Messteilung 11 kann je nach Abtastprinzip in bekannter Art und Weise als Amplitudengitter oder aber als Phasengitter ausgebildet sein.

Auf Seiten der Abtasteinheit 20 sind zur Erzeugung der verschiebungsabhängigen Positionssignale in einem geeigneten Gehäuse eine Lichtquelle 21, eine Kollimatoroptik 22 eine Abtastplatte 23 sowie eine Detektoranordnung 26 angeordnet. Als Lichtquelle 21 ist in diesem Beispiel eine LED vorgesehen. Die Abtastplatte 23 besteht im dargestellten Beispiel aus einem transparenten Trägerelement 23.1, beispielsweise ausgebildet als Glasplatte. Auf der der Messteilung 11 zugewandten Vorderseite bzw. Unterseite des Trägerelements 23.1 ist ein Abtastgitter 24 angeordnet. Auf der hierzu entgegengesetzten Rückseite bzw. Oberseite des Trägerelements 23.1, die der Detektoranordnung 26 zugewandt ist, ist erfindungsgemäß eine Dämpfungsstruktur 25 angeordnet, deren Funktion und konkrete Ausgestaltung nachfolgend noch detailliert erläutert wird.

Das Abtastgitter 24 besteht aus einer periodischen Anordnung von Teilungsbereichen mit unterschiedlichen optischen Durchlässigkeiten. Die Teilungsbereiche des Abtastgitters 24 sind ebenfalls strichförmig ausgebildet und erstrecken sich in der angegebenen y-Richtung, d.h. senkrecht zur Messrichtung x. Das Abtastgitter 24 ist demzufolge genauso orientiert im Abtaststrahlengang angeordnet wie die Messteilung 11. Je nach genutztem Abtastprinzip zur Erzeugung der verschiebungsabhängigen Positionssignale kann das Abtastgitter 24 als Amplitudengitter oder aber als Phasengitter ausgebildet sein.

Die von der Lichtquelle 21 emittierten und von der Kollimatoroptik 22 kollimierten Strahlenbündel wechselwirken in bekannter Art und Weise mit der Messteilung 11 und dem Abtastgitter 24, so dass über die Detektorelemente der Detektoranordnung 26 verschiebungsabhängig modulierte Positionssignale erzeugbar sind. Durch die geeignete Ausbildung bzw. Anordnung des Abtastgitters 24 in Form von geringfügig zueinander versetzten Abtastgitterbereichen, denen detektorseitig jeweils bestimmte Detektorelemente der Detektoranordnung 26 zugeordnet werden, ist es möglich phasenversetzte Positionssignale zu erzeugen; üblicherweise ist hierbei vorgesehen vier um je 90° phasenversetzte Positionssignale zu erzeugen, die in bekannter Art und Weise weiterverarbeitbar sind.
Der auf Seiten der Detektoranordnung 26 verwendete Opto-ASIC, der u.a. die Detektorelemente sowie weitere Bauelemente zur Signalverarbeitung enthält, ist in verschiedensten Positionsmesseinrichtungen einsetzbar, die unterschiedliche optische Abtastprinzipien nutzen. Dies hat zur Folge, dass bei manchen Abtastprinzipien die auf die Detektoranordnung fallende Lichtintensität zu hoch sein kann. Aus diesem Grund ist im vorliegenden Ausführungsbeispiel einer erfindungsgemäßen Positionsmesseinrichtung vorgesehen, auf der Abtastplatte 23 die Dämpfungsstruktur 25 anzuordnen, über die die Lichtintensität auf der Detektoranordnung 26 gezielt einstellbar ist. Die Dämpfungsstruktur 25 reduziert demzufolge die ansonsten zu hohe Intensität, die beim vorliegenden Abtastprinzip bzw. der hier genutzten Lichtquelle 21 andernfalls auf der Detektoranordnung 26 resultieren würde.

Erfindungsgemäß wird die Dämpfungsstruktur 25 in dieser Variante auf einer freien Oberfläche eines optischen Bauelements im Abtaststrahlengang angeordnet, nämlich auf der ansonsten nicht genutzten Rückseite des Trägerelements 23.1 der Abtastplatte 23, die der Detektoranordnung zugewandt ist. Es ist demzufolge nicht nötig, für die Dämpfungsstruktur 25 ein weiteres Bauelement vorzusehen, das im Verlauf der Herstellung der Positionsmessseinrichtung ggf. aufwendig zu montieren und zu justieren ist. Die Dämpfungsstruktur 25 besteht im dargestellten Beispiel aus einer Gitter-Teilung in Form eines Amplitudengitters, welches linienförmig ausgebildete, lichtdurchlässige Teilbereiche 25.1 umfasst, die periodisch in einer lichtundurchlässigen Schicht ausgebildet sind; die lichtundurchlässige Schicht besteht z.B. aus sog. Schwarzchrom. Neben der Ausbildung der lichtundurchlässigen Teilbereiche 25.2 in Form vollständig absorbierender Schichten können diese Teilbereiche 25.2 auch als bekannte Interferenzschichtstapel ausgebildet werden, in denen nach Mehrfachreflexion kein Licht mehr durchgelassen wird. Es resultiert in allen Fällen eine Gitter-Teilung, bestehend aus jeweils linienförmigen lichtdurchlässigen Teilbereichen 25.1 und lichtundurchlässigen Teilbereichen 25.2. Wie aus Figur 1 ersichtlich, erstrecken sich die linienförmigen Teilbereiche 25.1, 25.2 der Dämpfungsstruktur 25 in Messrichtung x, wobei die periodische Anordnung derselben in y-Richtung vorgesehen ist. Die Periodizität der als Gitter-Teilung ausgebildeten Dämpfungsstruktur ist in Figur 1 mit der Größe P bezeichnet und erstreckt sich über die Breite benachbarter lichtdurchlässiger und undurchlässiger Teilbereiche 25.1, 25.2 in der Anordnungsrichtung y; im dargestellten Ausführungsbeispiel wurde die Periodizität P = 175µm und die Transmission T = L/P = 0.33 gewählt, um die gewünschte Intensitätsreduzierung auf der Detektoranordnung 26 zu gewährleisten; L gibt hierbei die Breite der lichtdurchlässigen Teilbereiche 25.1 an. Die angestrebte Intensitätsminderung wird hierbei grundsätzlich über das Verhältnis aus absorbierender Fläche der jeweiligen Dämpfungsstruktur 25 zur Gesamtfläche der Rückseite des Trägerelements 23.1 der Abtastplatte 23 eingestellt, d.h. über das Verhältnis der durch die lichtundurchlässigen Teilbereiche 25.2 belegten Fläche zur Gesamtfläche.

Wenn die erfindungsgemäße Dämpfungsstruktur 25 wie im vorliegenden Fall als Gitter-Teilung ausgebildet wird und senkrecht zu den anderen Gittern orientiert angeordnet ist, so erweist sich sowohl in diesem Beispiel als auch in den Folgebeispielen zudem als vorteilhaft, wenn die Periodizität P der jeweiligen Gitter-Teilung deutlich kleiner gewählt wird als die Ausdehnung der Detektoranordnung bzw. die Ausdehnung einzelner Detektorelemente (sofern in Form einer Unterstrukturierung vorhanden) senkrecht zur Messrichtung, d.h. in y-Richtung. Die Periodizität P der Gitterteilung wird hierbei in einer möglichen Ausführungsform etwa um den Faktor 10 kleiner gewählt als die Ausdehnung eines Detektorelements in y-Richtung. Grund hierfür ist, dass dann eine größtmögliche Homogenisierung der Beleuchtungsintensität in dieser Richtung erzielt werden kann. Im Fall der grds. ebenfalls möglichen Anordnung einer Gitterteilung in der gleichen Orientierung wie die anderen Gitter im Abtaststrahlengang wäre hierbei natürlich die Ausdehnung der Detektorelemente in Messrichtung zu berücksichtigen etc..

Des Weiteren ist günstig, wenn die lichtundurchlässigen Teilbereiche 25.2 der Dämpfungsstruktur 25 in Bezug auf den Übergang Substrat - Luft optimiert werden, wenn wie in Figur 1 vorgesehen, die Abtast-Strahlenbündel zunächst das Abtastgitter 24 durchlaufen und erst dann auf die Dämpfungsstruktur 25 bzw. die entsprechende Gitter-Teilung treffen. Dies gilt insbesondere, wenn die Strahlenbündel im Abtaststrahlengang das Trägerelement 23.1 nicht senkrecht durchsetzen, sondern wie in Figur 1 gezeigt schräg verlaufen. In diesem Fall könnten ggf. Rückreflexe von lichtundurchlässigen Teilbereichen 25.2 auftreten, die sich nach Mehrfachreflexionen ggf. unerwünscht auf den Abtaststrahlengang auswirken und eine Verringerung des Modulationsgrades der Positionssignale zur Folge haben könnten. Im Rahmen einer derartigen Optimierung wird etwa die Schichtdicke der lichtundurchlässigen Teilbereiche 25.2 unter Berücksichtigung von Wellenlänge und Einstrahlwinkel so eingestellt, dass Rückreflexionen minimiert werden.

Die linienförmigen lichtdurchlässigen Teilbereiche 25.1 der Gitter-Teilung sind in dieser Variante der erfindungsgemäßen Positionsmesseinrichtung senkrecht zur Messteilung 11 sowie - im vorliegenden Beispiel - senkrecht zum Abtastgitter 24 im Abtaststrahlengang angeordnet, d.h. senkrecht zu weiteren Teilungen bzw. Gittern im Abtaststrahlengang. Diese Anordnung der als Gitter-Teilung ausgebildeten Dämpfungsstruktur 25 hat zur Folge, dass der eigentliche optische Abtaststrahlengang zur Erzeugung verschiebungsabhängiger Positionssignale möglichst gering beeinflusst wird.

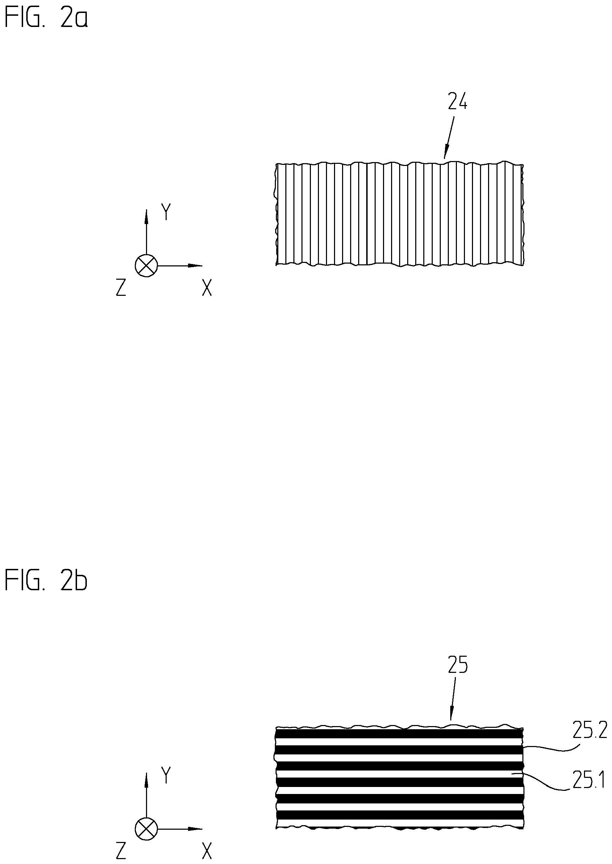

In Figur 2a ist eine Ausschnitts-Ansicht der Vorderseite der Abtastplatte 23 dargestellt, auf der die Abtaststruktur 24 angeordnet ist; Figur 2b zeigt einen Ausschnitt der Rückseite der Abtastplatte 23 mit der darauf angeordneten Dämpfungsstruktur 25 in Form einer Gitter-Teilung mit lichtdurchlässigen Teilbereichen 25.1 und lichtundurchlässigen Teilbereichen 25.2.

Grundsätzlich wird die erforderliche Dämpfungswirkung durch die jeweilige Dämpfungsstruktur 25 über das Verhältnis der Gesamtfläche der lichtdurchlässigen Teilbereiche 25.1 zur Gesamtfläche der Dämpfungsstruktur 25 eingestellt, d.h. letztlich über die geeignete Wahl der Transmission T der Dämpfungsstruktur 25. Im Fall einer nötigen Reduzierung der Signalintensität auf der Detektoranordnung auf 80% muss dann das entsprechende Verhältnis auf 80% eingestellt werden etc..

In der erläuterten ersten Variante einer erfindungsgemäßen Positionsmesseinrichtung besteht die Dämpfungsstruktur 25 wie erläutert aus linienförmigen lichtdurchlässigen Teilbereichen 25.1 auf einer ansonsten lichtundurchlässigen Schicht. Selbstverständlich ist jedoch alternativ hierzu auch möglich, für die lichtdurchlässigen Teilbereiche in der lichtundurchlässigen Schicht andere Geometrien vorzusehen. Beispielsweise könnte die Dämpfungsstruktur auch aus einer Vielzahl von kreisförmig ausgebildeten, lichtdurchlässigen Teilbereichen auf einer lichtundurchlässigen Schicht bestehen, die geeignet verteilt angeordnet sind. Die Verteilung der lichtdurchlässigen Teilbereiche kann hierbei sowohl regelmäßig als auch unregelmäßig erfolgen. Darüber hinaus sind alternativ zu kreisförmigen Teilbereichen natürlich noch weitere mögliche Geometrien für die durchlässigen Teilbereiche im Rahmen der vorliegenden Erfindung realisierbar.

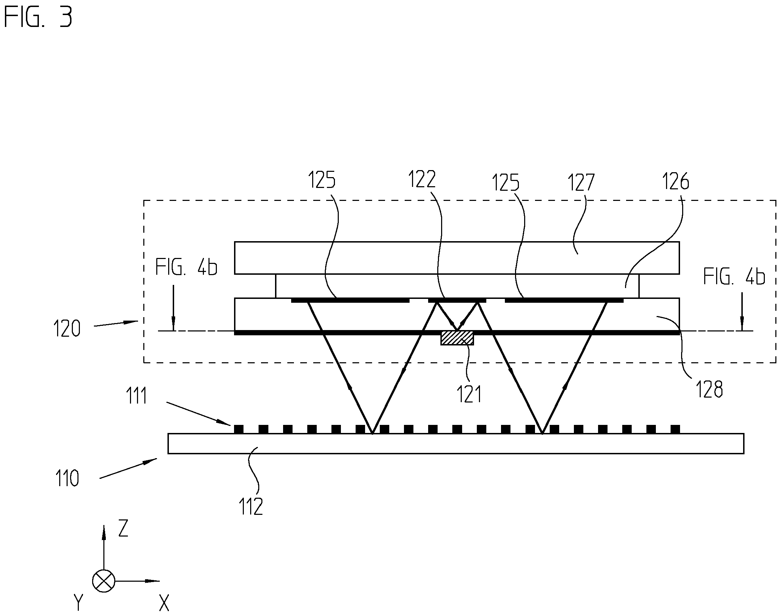

Eine zweite Variante einer erfindungsgemäßen Positionsmesseinrichtung ist in Figur 3 dargestellt; Figur 3 zeigt hierbei in stark schematisierter Form den Abtaststrahlengang dieser Variante, der sich von der ersten Variante unterscheidet.

Wiederum umfasst die erfindungsgemäße Positionsmesseinrichtung eine Abtasteinheit 120, die gegenüber einer Maßverkörperung 110 mit einer Messteilung 111 mindestens in Messrichtung x beweglich angeordnet ist. Die auf einem Trägerkörper 112, z.B. ein Stahlsubstrat, angeordnete Messteilung 111 ist wie in der obigen Variante als Reflexions-Messteilung ausgebildet.

Von der Abtasteinheit 120 sind in der stark schematisierten Darstellung der Figur 3 wiederum nur die für die Erläuterung der vorliegenden Erfindung nötigen Elemente gezeigt.

Auf Seiten der Abtasteinheit 120 ist auf einer Trägerplatine 127 eine Detektoranordnung 126 platziert. Die Detektoranordnung 126 dient zur Abtastung eines Streifenmusters in der Detektionsebene und zur Erzeugung von Positionssignalen. Das Streifenmuster in der Detektionsebene resultiert aus der optischen Abtastung der Messteilung 111 auf der Maßverkörperung 110, d.h. aus der Wechselwirkung der von der Lichtquelle 121 emittierten Strahlenbündel mit der Messteilung 111. Im Unterschied zur vorher erläuterten ersten Variante ist beim vorliegenden Abtastprinzip kein separates Abtastgitter im Abtaststrahlengang vorgesehen. Die Detektoranordnung 126 besteht hingegen nunmehr aus einem Detektorarray mit einer in Messrichtung x periodischen Anordnung von einzelnen Detektorelementen bzw. Photodioden. Somit übernimmt in dieser Ausbildung die Detektoranordnung gleichzeitig die Funktionalität von Abtastgitter und Detektorelementen.

Über der Detektoranordnung 126 ist auf Seiten der Abtasteinheit 120 in einem zentralen Bereich ein transparentes Trägersubstrat 128 angeordnet, beispielsweise ausgebildet als plattenförmiges Glas-Trägersubstrat. Auf der der Messteilung 111 zugewandten Seite des Trägersubstrats 128 ist die Lichtquelle 121 platziert. Als Lichtquelle 121 fungiert beim gewählten Abtastprinzip vorzugsweise eine Punktlichtquelle wie z.B. eine sog. VCSEL-Lichtquelle (Vertical Cacity Surface Emitting Laser).

Die strahlungsemittierende Fläche der Lichtquelle 121 ist in dieser Variante in Richtung der von der Messteilung 111 abgewandten Seite des Trägersubstrats 128 orientiert. Die Lichtquelle 121 strahlt demzufolge weg von der Messteilung 111.

Auf der der Messteilung 111 abgewandten Seite des Trägersubstrats 128 ist ein optisches Reflektorelement 122 angeordnet, das z.B. als in das Trägersubstrat 128 integrierte Gitterstruktur ausgebildet ist, d.h. als diffraktives optisches Element. Dessen optische Funktionalität im Abtaststrahlengang wird nachfolgend noch erläutert.

Die von der Lichtquelle 121 emittierten Strahlenbündel werden - wie aus Figur 3 ersichtlich - vom Reflektorelement 122 in Richtung der Messteilung 111 umgelenkt bzw. zurückreflektiert und durchlaufen anschließend das Trägersubstrat 128 nochmals in umgekehrter Richtung. Dann gelangen die Teilstrahlenbündel auf die Messteilung 111 und werden dort wiederum in Richtung der Abtasteinheit 120 zurückreflektiert. Auf Seiten der Abtasteinheit 120 gelangen die von der Messteilung 111 kommenden Teilstrahlenbündel schließlich auf die in der Detektionsebene platzierte Detektoranordnung 126 und erzeugen dort im Fall der Relativbewegung von Abtasteinheit 120 und Maßverkörperung 110 bzw. Messteilung 111 verschiebungsabhängige Positionssignale. Hierbei wird über den erläuterten Abtaststrahlengang und die dabei resultierenden Wechselwirkungen der Teilstrahlenbündel mit der Messteilung 111 ein periodisches Streifenmuster in der Detektionsebene erzeugt. Dieses wird im Fall der Relativbewegung von Abtasteinheit 120 und Maßverkörperung 110 verschiebungsabhängig moduliert und über die Detektoranordnung 126 in bekannter Art und Weise in mehrere phasenverschobene Inkrementalsignale zur Weiterverarbeitung umgewandelt.

Für das genutzte Abtastprinzip dieser Variante ist maßgeblich, dass die verwendete Lichtquelle 121 möglichst in der Detektionsebene angeordnet wird.

Nur in diesem Fall kann die Unempfindlichkeit des erzeugten periodischen Streifenmusters in der Detektionsebene vom jeweiligen Abtastabstand gewährleistet werden. Durch eine geschickte Auslegung des Abtaststrahlengangs und insbesondere durch das Vorsehen des erwähnten Reflektorelements 122 wird eine vorteilhafte Lösungsmöglichkeit zur Einhaltung dieser Anforderung angegeben. So kann durch die Integration des Reflektorelements 122 in den Abtaststrahlengang erreicht werden, dass die Lichtquelle 121 virtuell in der Detektionsebene platziert wird, während diese tatsächlich bzw. real an einer anderen Stelle der Abtasteinheit 120 angeordnet wird, nämlich wie etwa in Figur 3 ersichtlich auf der der Messteilung 111 zugewandten Seite des Trägersubstrats 128. In Bezug auf weitere Details bzgl. des Abtaststrahlengang dieser Variante sei z.B. auf die DE 10 2006 021 017 A1 sowie die DE 10 2007 028 943 A1 der Anmelderin verwiesen.

Die zur Anpassung bzw. Einstellung der Intensität auf der Detektoranordnung 126 erforderliche Dämpfungsstruktur 125 ist in dieser Variante im Abtaststrahlengang auf derjenigen Seite des Trägersubstrats 128 angeordnet, die abgewandt zur Messteilung bzw. zugewandt zur Detektoranordnung 126 orientiert ist. Wie aus Figur 3 ersichtlich, befindet sich die Dämpfungsstruktur 125 hierbei unmittelbar vor der Detektoranordnung 126. Dies ist insofern vorteilhaft, da dadurch die Wirkung der Dämpfungsstruktur 125 unmittelbar die Lichtverteilung auf dem Detektor betrifft.

Maßgeblich ist in dieser Variante der erfindungsgemäßen Positionsmesseinrichtung nunmehr primär eine spezielle Ausgestaltung der Dämpfungsstruktur 125. Während in der oben erläuterten ersten Variante über die gesamte Fläche der nachgeordneten Detektoranordnung eine ortsabhängig gleichmäßige Intensitätsreduzierung sichergestellt wurde, ist nunmehr vorgesehen, eine Dämpfungsstruktur 125 einzusetzen, die mindestens in einer Richtung eine ortsabhängig variierende Intensitätsbeeinflussung bzw. Intensitätsreduzierung in Bezug auf die durchgelassene Strahlungsintensität Intensität gewährleistet. Hierzu wird die Dämpfungsstruktur 125 dergestalt ausgebildet, dass diese in mindestens einer Richtung eine ortabhängig variierende Durchlässigkeit besitzt. Vorzugsweise ist hierbei zumindest in Messrichtung x eine variierende Durchlässigkeit der Dämpfungsstruktur 125 vorgesehen.

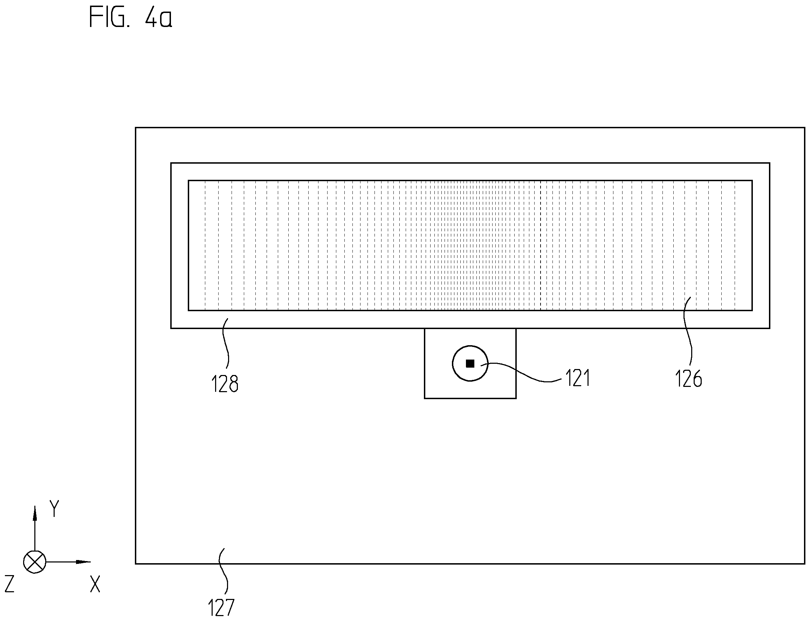

Eine derartige Ausbildung der Dämpfungsstruktur 125 ist in dieser Variante einer erfindungsgemäßen Positionsmesseinrichtung insbesondere aufgrund der verwendeten Lichtquelle 121 vorteilhaft. Diese ist wie oben erwähnt als VCSEL-Lichtquelle ausgebildet und liefert aufgrund ihrer Abstrahlcharakteristik keine hinreichend homogene Beleuchtungsintensität über die strahlungsempfindliche Fläche der Detektoranordnung 126. Vielmehr resultiert ohne die erfindungsgemäßen Maßnahmen eine nach außen hin steigende Intensität des Lichtmusters auf der Detektoranordnung 126. Eine Draufsicht auf das resultierende Lichtmuster bzw. dessen Intensitätsverteilung in der Detektionsebene der Detektoranordnung 126 aus Figur 3 ohne die erfindungsgemäße Dämpfungsstruktur ist in Figur 4a in stark schematisierter Darstellung gezeigt. Insbesondere in Messrichtung x ist eine deutliche Steigerung der Intensität des Lichtmusters von einem zentralen Bereich beidseitig nach außen hin festzustellen. Diese Intensitätsvariation wirkt sich negativ auf die Qualität der erzeugten Positionssignale aus.

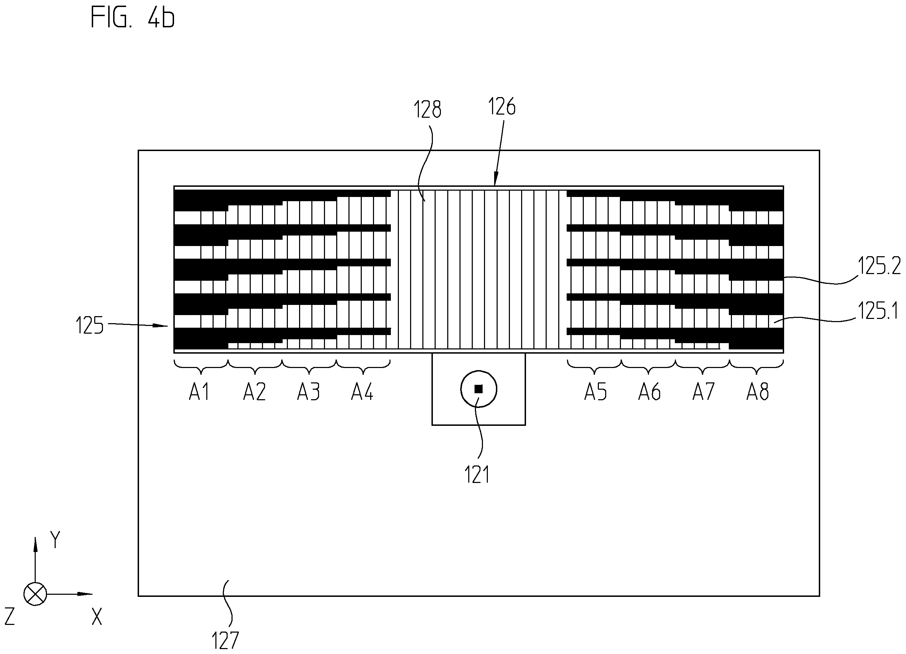

Figur 4b zeigt in einer Draufsicht auf die Abtasteinheit 120 ein Ausführungsbeispiel einer erfindungsgemäß ausgebildeten Dämpfungsstruktur 125, die eine derartig variierende Intensitätsverteilung entlang der Messrichtung x ortabhängig beeinflusst bzw. bedämpft. Es resultiert letztlich in der Detektionsebene ein Lichtmuster mit einer gleichmäßig reduzierten Intensitätsverteilung zumindest in Messrichtung x. Selbstverständlich ist es natürlich auch möglich, die Dämpfungsstruktur entlang mehrer Richtungen mit ortsabhängig variierenden Durchlässigkeiten zu versehen.

Grundsätzlich besteht eine derartige Dämpfungsstruktur 125 wie bereits in der ersten Variante aus einer bestimmten geometrischen Anordnung von lichtdurchlässigen Teilbereichen 125.1 auf einer ansonsten lichtundurchlässigen Schicht, in der dann die lichtundurchlässigen Teilbereiche 125.2 ausgebildet werden. Die entsprechenden Teilbereiche 125.1, 125.2 können wiederum linienförmig, d.h. als Gitter-Teilungen, ausgebildet werden oder aber andere Geometrien aufweisen.

Im dargestellten Ausführungsbeispiel der Figur 4b ist wiederum eine gitterteilungs-ähnliche Struktur als Dämpfungsstruktur 125 vorgesehen. Diese besteht umfasst in Messrichtung x mehrere Abschnitte A1 - A8 mit GitterTeilungen unterschiedlicher Periodizität. Im zentralen Bereich der Dämpfungsstruktur 125, in dem gemäß Figur 4a bereits eine geringere Intensität des Lichtmusters vorliegt, sind keine Gitter-Teilungen erforderlich. Nach außen hin erfolgt durch die gezeigte Dämpfungsstruktur 125 eine zunehmende Bedämpfung, indem über die unterschiedlichen, periodischen Gitterteilungen in den verschiedenen Abschnitten A1 - A8 sichergestellt wird, dass immer weniger Licht in Richtung Detektoranordnung 126 durch die lichtdurchlässigen Teilbereiche 1251.1 durchgelassen wird. So ist etwa in den außen liegenden Abschnitten A1 und A8 die Breite der lichtundurchlässigen Teilbereiche deutlich größer als etwa in den zentraler liegenden Abschnitten A4 und A5 etc..

Die wiederum linienförmigen, lichtdurchlässigen Teilbereiche 125.1 der verschiedenen Abschnitte A1 - A8 der Dämpfungsstruktur 125 sind wie in der ersten Variante in diesem Ausführungsbeispiel senkrecht zur Messteilung angeordnet. Die entsprechenden Teilbereiche 125.1 erstrecken sich ebenso wie die lichtundurchlässigen Teilbereiche 125.2 demzufolge in x-Richtung, d.h. senkrecht zur y-Richtung, entlang der sich die Teilungsbereiche der Messteilung erstrecken. Auf diese Art und Weise wird wiederum eine möglichst geringe optische Beeinflussung des Abtaststrahlengangs gewährleistet.

Zur Auslegung der in dieser Variante ortsabhängig variierenden Transmission T(k) der Dämpfungsstruktur 125 wird die geringste auf der Detektoranordnung 126 gemessene Intensität I₀ des Lichtmusters bestimmt. Wenn I(k) die am Ort k gemessene Intensität des Lichtmusters darstellt, ergibt sich dann die erforderliche ortsabhängige Transmission T(k) der Dämpfungsstruktur 125 zu T(k) = I₀ / I(k). Dies gilt grundsätzlich auf dann, wenn in k-Richtung größere Bereiche betrachtet werden und eine Diskretisierung der ortsabhängigen Transmission T(k) erfolgt.

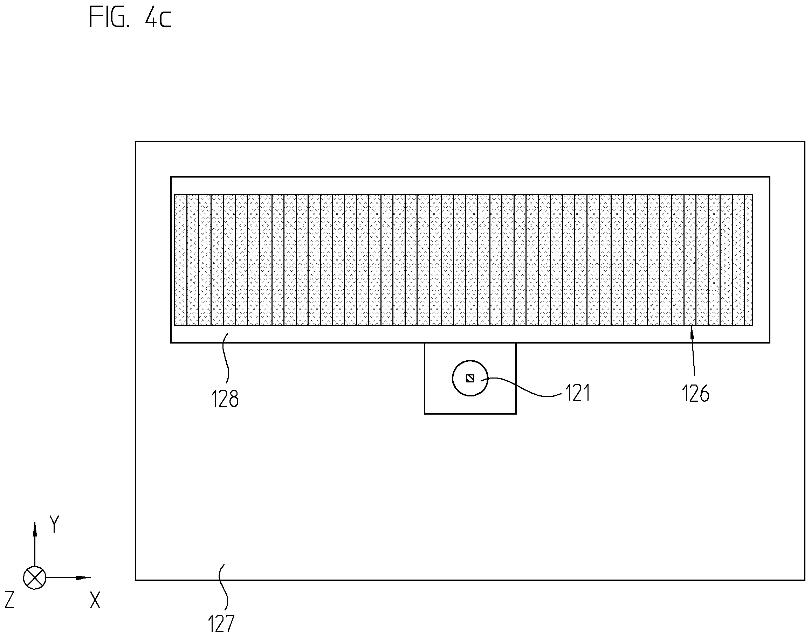

In Figur 4c ist schließlich dasjenige resultierende Lichtmuster auf der Detektoranordnung 126 gezeigt, wie es in Verbindung mit einer erfindungsgemäßen Dämpfungsstruktur gemäß Figur 4b resultiert. Entlang der Messrichtung x ist nunmehr eine homogene und gleichbleibend gedämpfte Intensität des Lichtmusters gewährleistet.

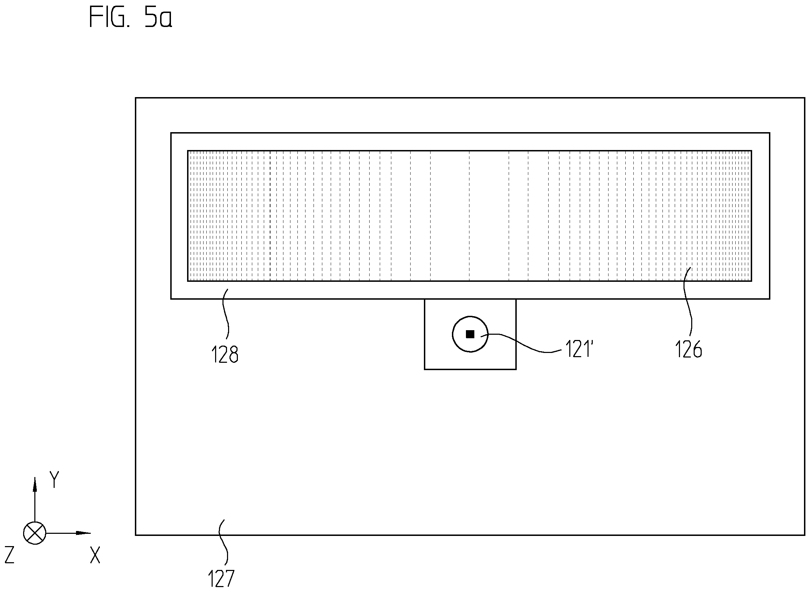

Der Fall einer anderen resultierenden Intensitätsverteilung auf der Detektoranordnung einer Positionsmesseinrichtung gemäß Figur 3 und eine hierzu geeignete Dämpfungsstruktur sei nachfolgend anhand von den Figuren 5a -5c erläutert.

So zeigt Figur 5a analog zu Figur 4a eine Draufsicht auf das resultierende Lichtmuster bzw. dessen Intensitätsverteilung in der Detektionsebene der Detektoranordnung 126 aus Figur 3 ohne eine vorgesehene Dämpfungsstruktur. Aufgrund der Verwendung einer anderen Lichtquelle 121' als in Figur 4a ist nunmehr aufgrund der Lichtquellen-Abstrahlcharakteristik in Messrichtung x eine deutliche Abnahme der Intensität des Lichtmusters von einem zentralen Bereich beidseitig nach außen hin festzustellen.

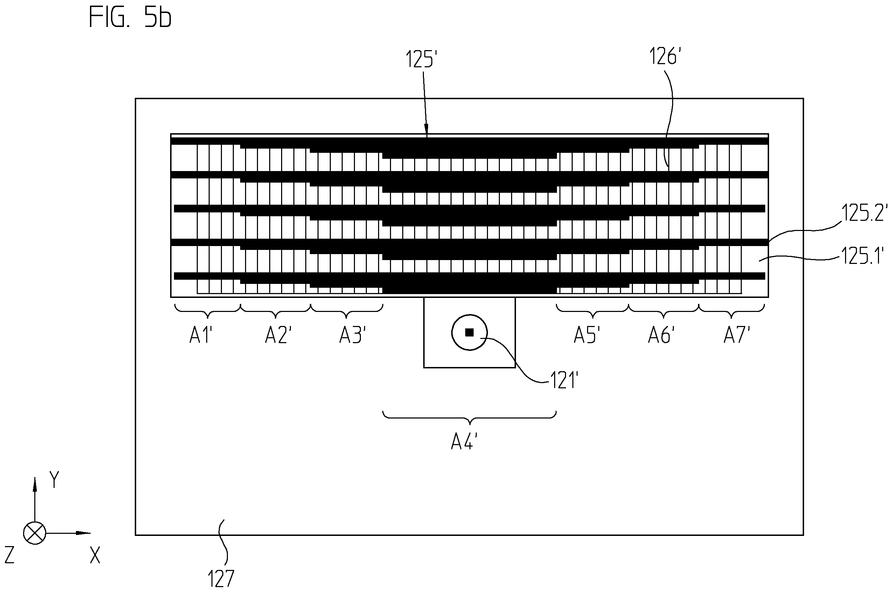

Um wiederum die angestrebte homogene Intensitätsverteilung auf der Detektoranordnung 126 zumindest in Messrichtung x sicherzustellen, wird erfindungsgemäß eine Dämpfungsstruktur 125' eingesetzt, wie sie in Figur 5b analog zur Darstellung in Figur 4b gezeigt ist. Über diese Ausführungsform einer erfindungsgemäßen Dämpfungsstruktur 125' muss demzufolge eine stärkere Bedämpfung der Lichtintensität im zentralen Bereich der Detektoranordnung 126' erfolgen, nach außen hin ist jeweils eine geringer werdende Bedämpfung erforderlich. Wie aus Figur 5b ersichtlich, ist auch nunmehr wiederum eine gitterteilungs-ähnliche Struktur als Dämpfungsstruktur 125' vorgesehen. Diese umfasst in Messrichtung x mehrere Abschnitte A1' - A7' mit Gitterteilungen unterschiedlicher Strich-Lücke-Verhältnisse bzw. mit unterschiedlicher Transmission T. Im zentralen Bereich der Dämpfungsstruktur 125', d.h. im Abschnitt A4', in dem gemäß Figur 5a die höchste Intensität des Lichtmusters vorliegt, ist diejenige periodische Gitterteilung vorgesehen, die die größte Breite für lichtundurchlässige Teilbereiche 125.2' aufweist bzw. die geringste Breite für lichtdurchlässige Teilbereiche 125.1'. Nach außen hin erfolgt durch die gezeigte Dämpfungsstruktur 125' eine geringer werdende Bedämpfung, indem über die unterschiedlichen Gitterteilungen in den verschiedenen Abschnitten A1 ' - A3' bzw. A5' - A7' sichergestellt wird, dass mehr Licht in Richtung Detektoranordnung 126 durch die lichtdurchlässigen Teilbereiche 125.1' durchgelassen wird.

Die wiederum linienförmigen, lichtdurchlässigen Teilbereiche 125.1' der verschiedenen Abschnitte A1' - A7' der Dämpfungsstruktur 125' sind wie in den vorherigen Ausführungsbeispielen jeweils senkrecht zur Messteilung angeordnet. Die entsprechenden Teilbereiche 125.1' erstrecken sich ebenso wie die lichtundurchlässigen Teilbereiche 125.2' demzufolge in x-Richtung, d.h. senkrecht zur y-Richtung, entlang der sich die Teilungsbereiche der Messteilung erstrecken.

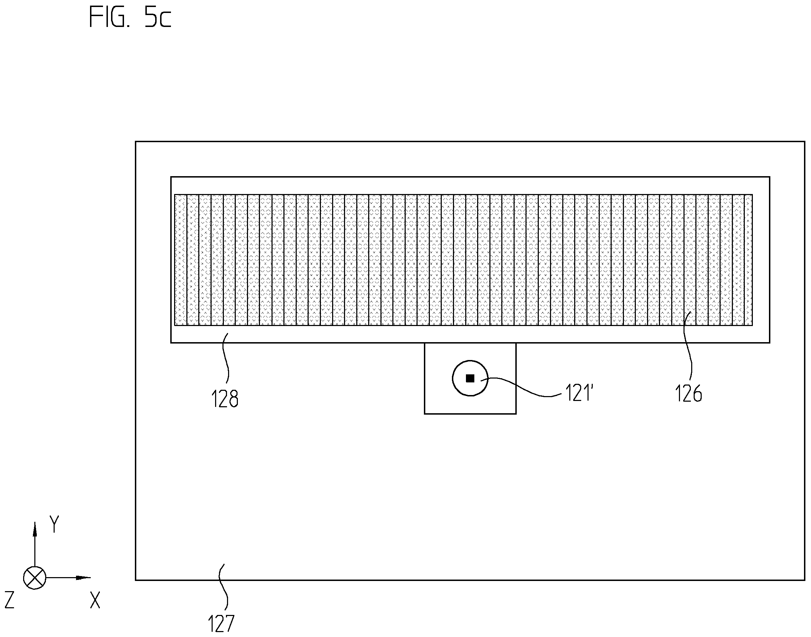

Das mit Hilfe einer derart ausgebildeten Dämpfungsstruktur 125' resultierende Lichtmuster auf der Detektoranordnung 126 ist in Figur 5c gezeigt. Entlang der Messrichtung x ist wiederum eine homogene und gleichbleibend gedämpfte Intensität des Lichtmusters gewährleistet.

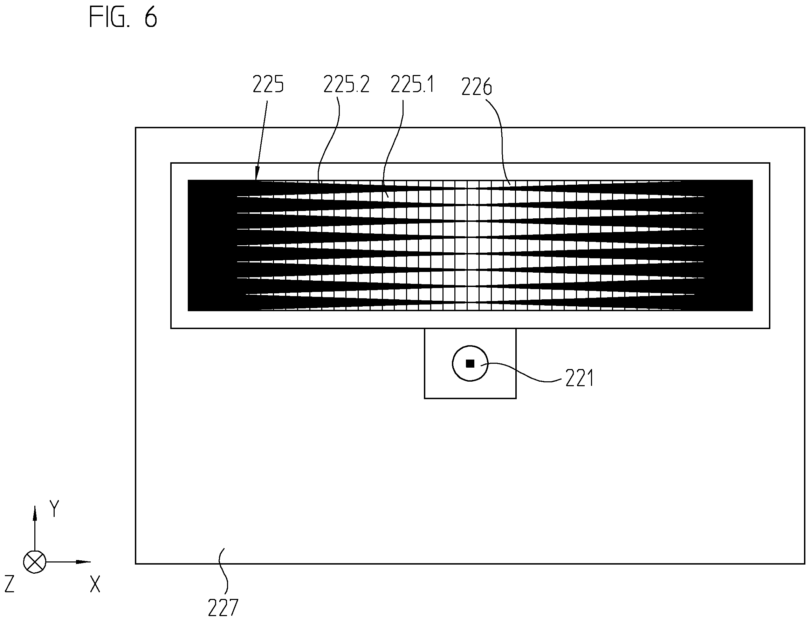

Eine weitere alternative Ausgestaltung einer Dämpfungsstruktur ist in Figur 6 dargestellt. Diese dient ebenfalls zur Bedämpfung eines resultierenden Intensitätsmusters auf der Detektoranordnung entlang der Messrichtung x, wie es in Figur 4a gezeigt ist. Hierbei war im zentralen Bereich der Detektoranordnung bereits eine hinreichend geringe Lichtintensität vorhanden, lediglich in den äußeren Bereichen der Detektoranordnung muss diese durch eine geeignete Auslegung einer Dämpfungsstruktur noch reduziert werden.

Die Dämpfungsstruktur 225 aus dem Beispiel gemäß Figur 6 besteht aus einer spiegelsymmetrischen Anordnung von kammartig angeordneten, dreieckförmigen undurchlässigen Teilbereichen 225.2, die sich in Richtung des zentralen Bereichs der Detektoranordnung 226 verjüngen. Auf diese Art und Weise wird wie durch die Dämpfungsstruktur aus Figur 4b eine gleichmäßige Intensitätsverteilung auf der Detektoranordnung 226 gewährleistet. Lediglich die geometrische Form der lichtdurchlässigen Teilbereiche 225.1 und der lichtundurchlässigen Teilbereiche 225.1 unterscheidet sich vom obigen Beispiel. Über die Dämpfungsstruktur 225 aus Figur 6 lässt sich eine besonders gleichmäßige Änderung der Bedämpfung entlang der Messrichtung x sicherstellen, ohne dass zu abrupte Sprünge derselben resultieren.

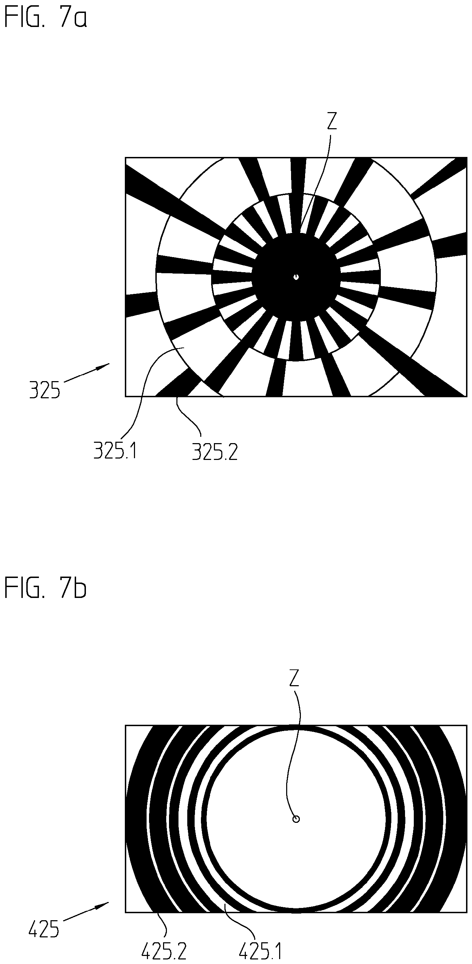

Anhand der Figuren 7a und 7b seien abschließend weitere Dämpfungsstrukturen erläutert, die jeweils eine ortsabhängig variierende Durchlässigkeit besitzen. Die in diesen Figuren schematisiert angedeuteten Dämpfungsstrukturen 325, 425 besitzen im Unterschied zu den bislang erläuterten Beispielen eine radialsymmetrische Ausbildung. Es erfolgt demzufolge darüber eine gezielte Bedämpfung einer darauf auftreffenden Intensitätsverteilung nicht nur entlang einer Richtung, beispielsweise entlang der Messrichtung, sondern vielmehr eine Bedämpfung in radialer Richtung um 360° ein Zentrum herum. Derart ausgebildete Dämpfungsstrukturen sind insbesondere dann vorteilhaft, wenn die zu homogenisierende Intensitätsverteilung ebenfalls radialsymmetrisch ist. Dies ist etwa bei punktförmigen Lichtquellen der Fall, die in der Regel eine derart radialsymmetrische Abstrahlcharakteristik besitzen.

Die in den Figuren 7a und 7b gezeigten Dämpfungsstrukturen 325, 425 mit Radialsymmetrie basieren grundsätzlich wieder auf Gitter-Teilungen, die in bestimmter Art und Weise geometrisch ausgestaltet und angeordnet werden.

Das in Figur 7a dargestellte Ausführungsbeispiel einer Dämpfungsstruktur 325 besitzt hierbei radial radialsymmetrisch angeordnete, linienförmige lichtdurchlässige Teilbereiche 325.2, die in Umfangsrichtung alternierend mit den lichtundurchlässigen Teilbereichen 325.1 angeordnet sind. Die Dämpfungsstruktur 325 ist in mehrere konzentrisch angeordnete Abschnitte unterteilt, innerhalb der sich die Periodizitäten der jeweils periodisch angeordneten lichtdurchlässigen und lichtundurchlässigen Teilbereiche 325.1, 325.2 unterscheiden. Die Durchlässigkeit in den konzentrischen Abschnitten nimmt dabei nach außen hin zu, im Bereich des Zentrums Z resultiert aufgrund des dort vorgesehenen vollständig lichtundurchlässigen Teilbereichs eine vollständige Bedämpfung.

Bei der in Figur 7b dargestellten Dämpfungsstruktur 425 mit Radialsymmetrie sind die lichtundurchlässigen Teilbereiche 425.2 und die lichtdurchlässigen Teilbereiche 425.1 jeweils als konzentrische Ringe um das Zentrum Z ausgebildet. Nach außen hin nimmt die Breite der kreisförmig angeordneten, lichtundurchlässigen Teilbereiche 425.2 zu, die Breite der kreisförmig angeordneten, lichtdurchlässigen Teilbereiche 425.1 hingegen ab; die Breiten der verschiedenen Teilbereiche 425.1, 425.2 variieren somit in radialer Richtung. Es resultiert eine nach außen hin zunehmende Bedämpfung der Lichtintensität, während in einem zentralen, inneren Teilbereich der Detektoranordnung 426 keinerlei Bedämpfung erfolgt.

Wie in den oben erläuterten Beispielen sind in den radialsymmetrischen Varianten einer Dämpfungsstruktur die jeweiligen lichtdurchlässigen Teilbereiche in einer ansonsten lichtundurchlässigen Schicht ausgebildet.

Im Rahmen der vorliegenden Erfindung existieren somit vielfältige Möglichkeiten zur Ausbildung geeigneter Dämpfungsstrukturen im Abtaststrahlengang optischer Positionsmesseinrichtungen. Die anhand der Beschreibung erläuterten Möglichkeiten lassen sich hierbei selbstverständlich je nach Bedarf geeignet kombinieren und an die jeweilige Situation entsprechend anpassen.

## Patentansprüche

1. Positionsmesseinrichtung zur Erfassung der Relativposition einer Abtasteinheit (20) sowie einer hierzu in mindestens einer Messrichtung (x) beweglichen Messteilung (111), wobei die Abtasteinheit (20) eine Lichtquelle (21), mindestens ein Abtastgitter (24), eine Detektoranordnung (26) sowie eine Dämpfungsstruktur (25; 125; 125'; 225) umfasst, über die die Lichtintensität auf der Detektoranordnung (26) eingestellt wird und wobei das Abtastgitter (24) und die Dämpfungsstruktur (25; 125; 125'; 225) auf der Vorder- und Rückseite eines transparenten Trägerelements (23.1) im Abtaststrahlengang angeordnet sind,
**dadurch gekennzeichnet,**
**dass** über die Dämpfungsstruktur (25; 125; 125'; 225) eine gezielte Einstellung der Lichtintensität auf der Detektoranordnung (26) dergestalt erfolgt, dass auf der Detektoranordnung (26) eine Intensitätsreduzierung resultiert und gleichzeitig der optische Abtaststrahlengang zur Erzeugung verschiebungsabhängiger Positionssignale über die Dämpfungsstruktur (25; 125; 125'; 225) möglichst gering beeinflusst wird und wobei die Dämpfungsstruktur (25; 125; 125'; 225) als Gitter-Teilung ausgebildet ist, deren linienförmige lichtdurchlässige Teilbereiche (25.1; 125.1; 125.1'; 225.1) senkrecht zur Messteilung (11) im Abtaststrahlengang angeordnet sind.

2. Positionsmesseinrichtung nach Anspruch 1,**dadurch gekennzeichnet, dass**
- die Lichtquelle aufgrund ihrer Abstrahlcharakteristik keine hinreichend homogene Beleuchtungsintensität über die strahlungsempfindliche Fläche der Detektoranordnung liefert und
- über die Ausbildung der Dämpfungsstruktur (125; 125'; 225) sichergestellt ist, dass in der Detektionsebene ein Lichtmuster mit einer reduzierten und gleichmäßigen Intensitätsverteilung zumindest entlang der Messrichtung (x) resultiert.

3. Positionsmesseinrichtung nach Anspruch 1, **dadurch gekennzeichnet, dass** die Dämpfungsstruktur (25; 125; 125'; 225) als Anordnung von lichtdurchlässigen Teilbereichen (25.1; 125.1; 125.1'; 225.1) auf einer lichtundurchlässigen Schicht ausgebildet ist.

4. Positionsmesseinrichtung nach Anspruch 3, **dadurch gekennzeichnet, dass** die Dämpfungsstruktur (25; 125; 125'; 225) als Gitter-Teilung ausgebildet ist, bei der lichtdurchlässige Teilbereiche (25.1; 125.1; 125.1'; 225.1) periodisch auf der lichtundurchlässigen Schicht angeordnet sind.

5. Positionsmesseinrichtung nach Anspruch 4, **dadurch gekennzeichnet, dass** die Gitter-Teilung der Dämpfungsstruktur (25; 125; 125'; 225) ein oder mehrere Periodizitäten (P) aufweist, die jeweils deutlich kleiner sind als die Ausdehnung der Detektoranordnung (26) in einer Richtung senkrecht zur Messrichtung (x).

6. Positionsmesseinrichtung nach Anspruch 3, **dadurch gekennzeichnet, dass** die Dämpfungsstruktur (125; 125') aus mehreren in Messrichtung (x) benachbart angeordneten Abschnitten (A1 - A8; A1' - A7') besteht, die jeweils eine periodisch in einer Richtung senkrecht zur Messrichtung (x) angeordnete Gitterteilung mit linienförmigen lichtdurchlässigen Teilbereichen (125.1; 125.1'; 125.2) umfasst, die periodisch auf der lichtundurchlässigen Schicht auf einem Trägerelement angeordnet sind und wobei in Messrichtung (x) benachbarte Abschnitte (A1 - A8; A1' - A7') eine unterschiedliche Periodizität besitzen.

7. Positionsmesseinrichtung nach Anspruch 1, **dadurch gekennzeichnet, dass** die Elemente in der Abtasteinheit (20) dergestalt angeordnet sind, dass
- die von der Lichtquelle (21) emittierten Strahlenbündel zunächst eine Kollimation über eine Kollimatorlinse (22) erfahren,
- die kollimierten Strahlenbündel daraufhin die Messteilung (11) beaufschlagen,
- die Strahlenbündel anschließend das Abtastgitter (24), das Trägerelement (23.1) und die Dämpfungsstruktur (25) durchlaufen,
- und schließlich die Detektoranordnung (26) beaufschlagen, an der dann verschiebungsabhängig modulierte Signale zur Weiterverarbeitung anliegen.

## Claims

1. Position measuring device for capturing the relative position of a scanning unit (20) and of a measurement position (111) which is moveable with respect thereto in at least one measurement direction (x), wherein the scanning unit (20) comprises a light source (21), at least one scanning grating (24), a detector array (26) and an attenuating structure (25; 125; 125'; 225), which are used to set the light intensity on the detector array (26), and wherein the scanning grating (24) and the attenuating structure (25; 125; 125'; 225) are arranged on the front and back of a transparent carrier element (23.1) in the scanning beam path,
**characterized in that**
targeted setting of the light intensity on the detector array (26) is performed via the attenuating structure (25; 125; 125'; 225) such that an intensity reduction is effected on the detector array (26) and, at the same time, the optical scanning beam path for generating displacement-dependent position signals via the attenuating structure (25; 125; 125'; 225) is influenced as little as possible, and wherein the attenuating structure (25; 125; 125'; 225) is configured in the form of a grating graduation, with the line-shaped light-transmissive partial regions thereof (25.1; 125.1; 125.1'; 225.1) being arranged perpendicular to the measurement graduation (11) in the scanning beam path.

2. Position measuring device according to Claim 1, **characterized in that**
- the light source does not provide sufficiently homogeneous lighting intensity over the radiationsensitive surface of the detector array due to its emission characteristic, and
- it is ensured via the configuration of the attenuating structure (125; 125'; 225) that a light pattern having a reduced and uniform intensity distribution is effected in the detection plane at least along the measurement direction (x).

3. Position measuring device according to Claim 1,
**characterized in that** the attenuating structure (25; 125; 125'; 225) is configured as an arrangement of light-transmissive partial regions (25.1; 125.1; 125.1'; 225.1) on an opaque layer.

4. Position measuring device according to Claim 3,
**characterized in that** the attenuating structure (25; 125; 125'; 225) is configured as a grating graduation in which light-transmissive partial regions (25.1; 125.1; 125.1'; 225.1) are arranged periodically on the opaque layer.

5. Position measuring device according to Claim 4,
**characterized in that** the grating graduation of the attenuating structure (25; 125; 125'; 225) has one or more periodicities (P) which are in each case significantly smaller than the extent of the detector array (26) in a direction perpendicular to the measurement direction (x).

6. Position measuring device according to Claim 3,
**characterized in that** the attenuating structure (125; 125') consists of a plurality of sections (A1 - A8; A1ʹ A7ʹ) which are arranged next to one another in the measurement direction (x) and which in each case comprise a grating graduation, which is arranged periodically in a direction perpendicular to the measurement direction (x), with line-shaped light-transmissive partial regions (125.1; 125.1'; 125.2) which are arranged periodically on the opaque layer on a carrier element, and wherein sections (A1-A8; A1ʹ-A7ʹ), which are arranged next to one another in the measurement direction (x), have different periodicities.

7. Position measuring device according to Claim 1,
**characterized in that** the elements in the scanning unit (20) are arranged such that
- the beams emitted by the light source (21) initially undergo collimation via a collimator lens (22),
- the collimated beams are then incident on the measurement graduation (11),
- the beams subsequently pass through the scanning grating (24), the carrier element (23.1) and the attenuating structure (25),
- and finally are incident on the detector array (26), where signals modulated in a displacement-dependent manner are then present for further processing.

## Revendications

1. Dispositif de mesure de position destiné à détecter la position relative d'une unité de balayage (20) ainsi que d'une graduation de mesure (111) mobile par rapport à celle-ci dans au moins une direction de mesure (x), dans lequel l'unité de balayage (20) comprend une source lumineuse (21), au moins un réseau de balayage (24), un système détecteur (26) ainsi qu'une structure d'amortissement (25 ; 125 ; 125' ; 225), par l'intermédiaire desquels l'intensité lumineuse est réglée sur le système détecteur (26) et dans lequel le réseau de balayage (24) et la structure d'amortissement (25 ; 125 ; 125ʹ ; 225) sont disposés sur des faces avant et arrière d'un élément de support transparent (23.1) sur le chemin du faisceau de balayage,
**caractérisé en ce qu'**un réglage ciblé de l'intensité lumineuse est effectué sur le système détecteur (26) par l'intermédiaire de la structure d'amortissement (25 ; 125 ; 125ʹ ; 225) de manière à ce qu'il en résulte sur le système détecteur (26) une réduction d'intensité et à ce que le chemin du faisceau de balayage optique soit simultanément influencé le plus faiblement possible par l'intermédiaire de la structure d'amortissement (25 ; 125 ; 125' ; 225) pour générer des signaux de position dépendant du décalage et dans lequel la structure d'amortissement (25 ; 125 ; 125' ; 225) est réalisée sous la forme d'une division de réseau, dont des régions partielles transparentes à la lumière linéaires (25.1 ; 125.1 ; 125.1' ; 225.1) sont disposées perpendiculairement à la graduation de mesure (11) sur le chemin du faisceau de balayage.

2. Dispositif de mesure de position selon la revendication 1, **caractérisé en ce que**
- la source lumineuse, en raison de sa caractéristique de rayonnement, ne délivre pas une intensité d'éclairement suffisamment homogène par l'intermédiaire de la surface sensible au rayonnement du système détecteur, et
- il est fait en sorte, par l'intermédiaire de la forme de la structure d'amortissement (125 ; 125' ; 225), qu'il en résulte dans le plan de détection un motif lumineux ayant une distribution d'intensité réduite et uniforme au moins le long de la direction de mesure (x).

3. Dispositif de mesure de position selon la revendication 1, **caractérisé en ce que** la structure d'amortissement (25 ; 125 ; 125' ; 225) est réalisée sous la forme d'un agencement de régions partielles transparentes à lumière (25.1 ; 125.1 ; 125.1' ; 225.1) sur une couche non transparente à lumière.

4. Dispositif de mesure de position selon la revendication 3, **caractérisé en ce que** la structure d'amortissement (25 ; 125 ; 125' ; 225) est réalisée sous la forme d'une division de réseau, pour laquelle des régions partielles transparentes à la lumière (25.1 ; 125.1 ; 125.1' ; 225.1) sont disposées périodiquement sur la couche non transparente à lumière.

5. Dispositif de mesure de position selon la revendication 4, **caractérisé en ce que** la division de réseau de la structure d'amortissement (25 ; 125 ; 125' ; 225) comporte une ou plusieurs périodicités (P) qui sont respectivement sensiblement plus petites que l'étendue du système détecteur (26) dans une direction perpendiculaire à la direction de mesure (x).

6. Dispositif de mesure de position selon la revendication 3, **caractérisé en ce que** la structure d'amortissement (125 ; 125') est constituée de plusieurs parties (A1 - A8 ; A1' - A7'), disposées de manière adjacente dans la direction de mesure (x), qui comprennent respectivement une division de réseau disposée périodiquement dans une direction perpendiculaire à la direction de mesure (x) et comportant des régions partielles transparentes à lumière linéaires (125.1 ; 125.1' ; 125.2), qui sont disposées périodiquement sur un élément de support, sur la couche non transparente à lumière, et dans lequel des parties voisines (A1 - A8 ; A1' - A7') possèdent une périodicité différente dans la direction de mesure (x) .

7. Dispositif de mesure de position selon la revendication 1, **caractérisé en ce que** les éléments sont disposés dans l'unité de balayage (20) de telle sorte que
- les faisceaux émis par la source lumineuse (21) subissent en premier lieu une collimation par l'intermédiaire d'une lentille de collimation (22),
- les faisceaux collimatés sont ensuite incidents sur la graduation de mesure (11),
- les faisceaux passent ensuite à travers le réseau de balayage (24), l'élément de support (23.1) et la structure d'amortissement (25),
- et enfin, sont incidents sur le système détecteur (26), sur lequel apparaissent ensuite des signaux modulés en fonction du décalage en vue d'un traitement supplémentaire.
